Europäisches Patentamt

European Patent Office

Office européen des brevets

(19)

(11) Veröffentlichungsnummer: **0 124 751**
**B1**

(12) **EUROPÄISCHE PATENTSCHRIFT**

(45) Veröffentlichungstag der Patentschrift: **18.07.90**

(51) Int. Cl.⁵: **B 60 N 2/02**

(21) Anmeldenummer: **84103507.4**

(22) Anmeldetag: **30.03.84**

(54) **Steuerschalter für eine Fahrzeugsitz-Verstelleinrichtung.**

(30) Priorität: **07.04.83 DE 3312494**

(43) Veröffentlichungstag der Anmeldung:
**14.11.84 Patentblatt 84/46**

(45) Bekanntmachung des Hinweises auf die
Patenterteilung:
**18.07.90 Patentblatt 90/29**

(84) Benannte Vertragsstaaten:
**FR GB IT**

(56) Entgegenhaltungen:
**DE-A-2 836 004**
**DE-A-2 839 367**
**US-A-3 288 947**

(73) Patentinhaber: **KEIPER RECARO GmbH & Co.**
**Büchelstrasse 54-58**
**D-5630 Remscheid 14 (DE)**

(72) Erfinder: **Wittig, Werner, Dipl.-Ing.**
**Wiehernstrasse 37**
**D-6752 Winnweiler (DE)**

(74) Vertreter: **Patentanwälte Phys. Bartels Dipl.-Ing.**
**Fink Dr.-Ing. Held**
**Lange Strasse 51**
**D-7000 Stuttgart 1 (DE)**

EP 0 124 751 B1

Courier Press, Leamington Spa, England.

**Beschreibung**

Die Erfindung betrifft einen Steuerschalter gemäß dem Oberbegriff des Anspruches 1.

Ein bekannter Steuerschalter dieser Art (DE-A-28 39 367) weist für die Sitzlängsverstellung sowie die vordere und hintere Höhenverstellung des Sitzteils drei vierpolige Kontaktsysteme auf, die je mittels eines einen Schieber bildenden Zapfens betätigt werden. Diese Zapfen sind nicht nur in je einem schlitzförmigen Durchbruch einer Abdeckplatte geführt, sondern auch in je einem zu diesem Durchbruch rechtwinklig verlaufenden Führungsschlitz des allen drei Zapfen gemeinsamen Handgriffes. Durch diese Ausbildung des Schalters ist es zwar möglich, die hinteren und vorderen Höhenversteller und/oder Längsversteller nicht nur unabhängig voneinander, sondern auch gemeinsam ein- und auszuschalten. Der Aufwand für diesen Schalter ist jedoch beträchtlich. Ausserdem ist der Einsatz eines solchen Schalters nur dann gerechtfertigt, wenn die einzelnen Verstellantriebe der Verstelleinrichtung auch gleichzeitig wirksam gemacht werden können, was vielfach nicht der Fall ist.

Der Erfindung liegt die Aufgabe zugrunde, einen Steuerschalter für eine mindestens zwei unterschiedliche Verstellbewegungen eines Fahrzeugsitzes ermöglichende, motorisch angetriebene Verstelleinrichtung zu schaffen, die eine gleichzeitige Einschaltung mehrerer Verstellantriebe ausschließt, aber dennoch einfach ausgebildet und zu betätigen ist. Diese Aufgabe löst ein Steuerschalter mit den Merkmalen des Anspruches 1.

Ein derartiger Steuerschalter erlaubt es auch, die Verstelleinrichtung mit einem Zentralantrieb auszurüsten, der die Verstellvorrichtungen für die verschiedenen Verstellbewegungen nur einzeln anzutreiben vermag.

Besondere Vorteile bietet der erfindungsgemäße Steuerschalter in Verbindung mit einer Verstelleinrichtung, die je eine Verstelleinheit zur Sitzlängsverstellung sowie zur vorderen und hinteren Höhenverstellung des Sitzteils aufweist. Die Anordnung der beiden kreuzförmigen Schlitze wird zweckmäßigerweise so getroffen, daß der eine der beiden sich kreuzenden Teile jedes kreuzförmigen Schlitzes, in dessen einem Endbereich sich die Schaltstellung des zugeordneten Zapfens für eine Sitzlängsverstellung befindet, mit dem entsprechenden Teil des anderen kreuzförmigen Schlitzes fluchtet. Für die Steuerung von drei Verstelleinheiten je in der einen bzw. entgegengesetzten Richtung sind hier also nur zwei Zapfen erforderlich, von denen mittels des einen die vordere Höhenverstellung in beiden sowie die Längsverstellung in der einen Richtung und mit dem anderen die hintere Höhenverstellung in beiden Richtungen sowie die Längsverstellung in der anderen Richtng gesteuert werden kann. Dies führt trotz einer einfachen Bedienbarkeit zu einem erheblich verminderten Aufwand. Die Verwendung von nur zwei Zapfen erlaubt es ferner, die Handhabe quer zur Längserstreckung der Zapfen unbeweglich mit den Zapfen zu verbinden, was den Aufwand noch weiter reduziert.

Um zweifelsfrei die Handhabe auch ohne sie zu sehen bedienen zu können, hat sie, wie bekannt, vorteilhafterweise eine Kontur, die der stilisierten Kontur des verstellbaren Sitzteils entspricht.

Bei einer bevorzugten Ausführungsform für eine Steuerung ohne Speicher ist zumindest der eine Zapfen wenigstens auf einem Teil seiner Länge als Kontaktstück ausgebildet, das in jeder Schaltstellung wenigstens ein zweites Kontaktstück des der betreffenden Schaltstellung zugeordneten Kontaktsystems kontaktiert. Der eine Zapfen oder beide Zapfen können hier also durch je einen Kontaktstift gebildet sein, was die Konstruktion des erfindungsgemäßen Schalters noch weiter vereinfacht.

Vor allem dann, wenn die Steuerung einen Speicher besitzt, wird es in der Regel nicht möglich sein, den Zapfen als Kontaktstück zu verwenden. Man kann dann jedoch mittels des Zapfens unmittelbar die Kontaktsysteme betätigen.

Damit die Bedienungsperson am Ende eines Verstellvorgangs nur die Handhabe freizugeben braucht, um die Verstellung zu beenden, ist vorzugsweise ein von den Zapfen und/oder der Handhabe beeinflußbares elastisches Rückstellsystem vorgesehen, das bei jeder Bewegung wenigstens eines der Zapfen aus einer neutralen Stellung heraus in eine der Schaltstellungen einer eine selbsttätige Rückführung der Zapfen in deren neutrale Stellung gestattenden Belastung ausgesetzt ist. Dieses Rückstellsystem kann beispielsweise aus Schraubenfedern bestehen.

Im folgenden ist die Erfindung anhand von in der Zeichnung dargestellten Ausführungsbeispielen im einzelnen erläutert.

Es zeigen:

Fig. 1 eine Seitenansicht eines ersten Ausführungsbeispiels,

Fig 2 einen schematisch dargestellten, parallel zu der in Fig. 1 sichtbaren Seite verlaufenden Schnitt durch das erste Ausführungsbeispiel,

Fig. 3 einen Schnitt entsprechend Fig. 2 eines zweiten Ausführungsbeispiels,

Fig. 4 eine Matrix mit dem zweiten Ausführngsbeispiel.

Ein nicht dargestellter Kraftfahrzeugsitz ist mit einer nicht dargestellten, da in bekannter Weise ausgebildeten, motorisch angetriebenen Verstelleinrichtung ausgerüstet, die nicht nur eine Längsverstellung des Sitzes erlaubt, sondern auch eine Höhenverstellung seines Sitzteils sowohl in dessen vorderem als auch in dessen hinterem Bereich, so daß außer der Sitzhöhe auch die Neigungslage des Sitzteils verändert werden kann. Diese Verstelleinrichtung ist mit einem zentralen Antrieb ausgerüstet, mittels dessen wahlweise und nur einzeln die drei Verstelleinheiten angetrieben werden können, und zwar wahlweise in der einen oder anderen Richtung.

Für jede der Verstellbewegungen ist ein Steuerstromkreis vorgesehen, der solange geschlossen gehalten werden muß, als die Verstellbewegung

2

andauern soll. Insgesamt sind somit sechs Steuerstromkreise vorhanden. Es dürfen jedoch nicht gleichzeitig zwei oder mehr dieser Steuerstromkreise geschlossen werden. Dies läßt der verwendete Zentralantrieb nicht zu. Aber auch bei einem Einzelantrieb der verschiedenen Verstelleinheiten kann erwünscht sein, diese Einheiten nur einzeln aktivieren zu können.

Die Steuerung aller drei ebenfalls nicht dargestellten Verstelleinheiten erfolgt mittels eines einzigen Steuerschalters 1, der im Ausführungsbeispiel seitlich am Gestell des zu verstellenden Sitzes angeordnet ist, aber auch an einer anderen Stelle des Fahrzeuges angeordnet sein könnte, beispielsweise an der Türe oder an einer Konsole. Dieser Steuerschalter 1 weist ein Gehäuse auf, das aus einem eine Frontplatte 2 sowie die Seitenwände 3 bildenden Teil und einer diesen Teil von hinten verschließenden Abdeckplatte 4 besteht. Letztere wird mit Hilfe nicht dargestellter Verbindungsmittel seitlich am Sitzgestell festgelegt. Selbstverständlich könnte das Schaltergehäuse auch eine von der Quaderform, die es im Ausführungsbeispiel hat, abweichende Form sowie eine andere konstruktive Gestaltung haben.

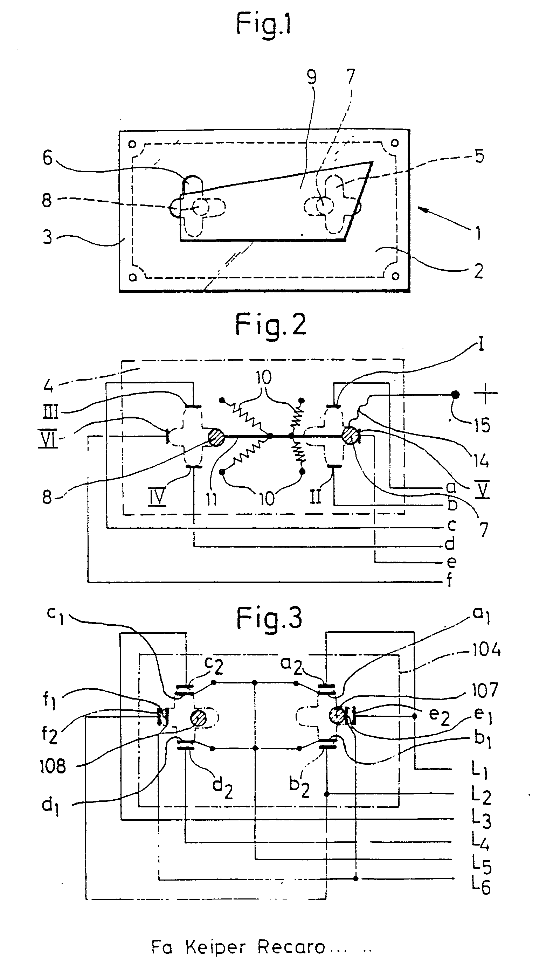

Die Frontplatte 2 ist mit einer aus zwei kreuzförmigen Schlitzen 5 und 6 gebildeten Kulisse versehen. Wie insbesondere Fig. 1 zeigt, fluchtet der eine der beiden sich kreuzenden Teile des kreuzförmigen Schlitzes 5 mit dem entsprechenden Teil des kreuzförmigen Schlitzes 6. Beide Teile haben ungefähr gleiche Abmessungen. Vorzugsweise wird der Steuerschalter 1 so montiert, daß sich diese beiden Teile in der Bewegungsrichtung des Sitzes bei einer Längsverstellung erstrecken. Die beiden anderen, parallel zueinander verlaufenden Teile der beiden kreuzförmigen Schlitze 5 und 6 erstrecken sich dann in vertikaler Richtung, also in Richtung der Bewegung des Sitzes bei einer Höhenverstellung. Auch diese beiden Teile haben ungefähr gleiche Abmessungen und stehen über den sich in Sitzlängsrichtung erstreckenden Teil nach oben und unten zumindest annähernd gleich weit über. Wie insbesondere Fig. 1 zeigt, kreuzen diese vertikal verlaufenden Teile im Ausführungsbeispiel die horizontalen Teile nicht auf halber Länge. Vielmehr sind die gegeneinander weisenden Abschnitte der horizontalen Teile etwas länger als die voneinander wegweisenden Abschnitte.

Die beiden kreuzförmigen Schlitze 5 und 6 werden von je einem elektrisch leitenden Steuerstift 7 bzw. 8 durchdrungen, deren Längsachse lotrecht auf der von der Frontplatte 2 definierten Ebene steht. Der Durchmesser der beiden gleich ausgebildeten Steuerstifte 7 und 8 ist so gewählt; daß die Steuerstifte mit einem für eine leichte Beweglichkeit ausreichenden Spiel quer zu ihrer Längsachse in dem zugeordneten kreuzförmigen Schlitz bewegt werden können, der je eine Kulisse für den Steuerstift bildet. Der aus der Frontplatte 2 herausragende Endabschnitt beider Steuerstifte 7 und 8 greift in eine beiden Steuerstiften gemeinsame Handhabe 9 ein und ist mit dieser fest verbunden. Die Handhabe 9 hat, wie Fig. 1 zeigt, eine Kontur, die der stilisierten Seitenansicht des Sitzteils eines Fahrzeugsitzes entspricht. Der hintere Abschnitt der Handhabe 9 wird von dem im hinteren Schlitz 6 geführten Steuerstift 8, der vordere Abschnitt in dem vom vorderen Schlitz 5 geführten Steuerstift 7 getragen. Bei einer Anordnung des Steuerschalters 1 seitlich am Sitzgestell des Fahrzeugsitzes derart, daß die beiden miteinander fluchtenden Teile der kreuzförmigen Schlitze 5 und 6 sich in Sitzlängsrichtung erstrekken, nimmt die Handhabe 9 die gleiche Position wie der von ihr symbolisch dargestellte Sitzteil ein, d.h. ihr vom vorderen Steuerstift 7 getragener Abschnitt weist nach vorne und der vom hinteren Steuerstift getragene Abschnitt nach hinten. Nicht dargestellte Mittel, beispielsweise je ein Sicherungsring, ein Ringbund oder auch eine Führungsplatte sichern die beiden Steuerstifte 7 und 8 gegen eine Verschiebung in ihrer Längsrichtung relativ zum Schaltergehäuse. Sie können daher mit Hilfe der Handhabe 9 nur quer zu ihrer Längsrichtung in den durch die beiden kreuzförmigen Stifte 5 und 6 gebildeten Kulissen bewegt werden.

Wie insbesondere Fig. 2 erkennen läßt, ist der Abstand der beiden Steuerstifte 7 und 8, gemessen zwischen ihrer Längsachse, etwas geringer als der Abstand des Kreuzungsmittelpunktes des kreuzförmigen Schlitzes 5 vom Kreuzungsmittelpunkt des kreuzförmigen Schlitzes 6. Wenn der Steuerschalter 1 nicht betätigt ist, auf die Handhabe 9 also keine Betätigungskraft ausgeübt wird, greifen deshalb die beiden Steuerstifte 7 und 8 etwas in die gegeneinander weisenden Abschnitte der horizontalen Teile der beiden kreuzförmigen Schlitze 5 bzw. 6 ein Gehalten werden die Steuerstifte 7 und 8 sowie die Handhabe 9 in dieser Stellung mit Hilfe von vier Schraubenfedern 10, die mit Vorspannung an einem sich vom einen zum anderen Steuerstift erstreckenden Verbindungsteil 11 angreifen, der die beiden Steuerstifte mechanisch fest und elektrisch leitend miteinander verbindet. Die vier gleich ausgebildeten und eine gleiche Vorspannung aufweisenden Schraubenfedern 10 sind andererseits, beispielsweise über je einen Stift, am Schaltergehäuse festgelegt und, wie Fig. 2 zeigt, so angeordnet, daß die eine Schraubenfeder auf den Verbindungsteil 11 eine Kraftkomponente in dessen Längsrichtung gegen den Steuerstift 7 und gleichzeitig nach oben, die zweite Schraubenfeder eine Kraftkomponente in der gleichen Längsrichtung des Verbindungsteils, aber außerdem nach unten, die dritte Schraubenfeder eine Kraftkomponente in der entgegengesetzten Längsrichtung des Verbindungsteils 11, also gegen den Steuerstift 8 hin sowie ebenfalls nach unten die vierte Schraubenfeder eine Kraftkomponente in der gleichen Längsrichtung des Verbindungsteiles 11 aber außerdem nach oben ausüben. Der Kraftaufwand für eine Längsverschiebung der Handhabe 9 und der Steuerstifte 7 sowie 8 in die in Fig. 2 dargestellte eine Schaltstellung oder in die entgegengesetzte Schaltstellung ist hierbei etwas geringer als eine Bewegung des einen oder anderen Steuerstiftes in die obere oder untere Schaltstellung, in der er sich im Bereich des oberen bzw. unteren Endes des vertikalen Teils des kreuzförmigen Schlitzes befindet. Der etwas geringere Abstand der beiden Steuerstifte 7 und 8 voneinander als der Abstand der Kreuzungsmittelpunkte der beiden kreuzförmigen Schlitze 5 und 6 voneinander läßt es nicht zu, beide Steuerstifte 7 und 8 gleichzeitig in eine Schaltstellung, also beide Steuerstifte beispielsweise gleichzeitig nach oben oder nach unten in den vertikalen Teilen der kreuzförmigen Schlitze zu bewegen.

Jedem der beiden Steuerstifte 7 und 8 sind drei auf der Abdeckplatte feststehend angeordnete Kontaktstücke I,II und V bzw. III, IV und VI zugeordnet. Wie Fig. 2 zeigt, sind die Kontaktstücke I, II und V so angeordnet, daß der Steuerstift 7 je eines von ihnen kontaktiert, wenn er sich in dem nach oben weisenden Abschnitt des vertikalen Teils, in dem nach unten weisenden Abschnitt des vertikalen Teils des kreuzförmigen Schlitzes 5 oder in dem vom kreuzförmigen Schlitz 6 wegweisenden Abschnitt des horizontalen Teils befindet. Entsprechend sind die Kontaktstücke III, IV, und VI so angeordnet, daß der Steuerstift 8 eines von ihnen kontaktiert, wenn er sich in seiner oberen, seiner unteren oder seiner vorderen Schaltstellung befindet.

Die beiden elektrisch leitend miteinander verbundenen Steuerstifte 7 und 8 sind über eine flexible Verbindungsleitung 14 mit dem einen Pol, im Ausführungsbeispiel dem Pluspol 15, des Bordnetzes zu verbinden. Die Kontaktstücke I bis VI sind an Steuerleitungen a bis f angeschlossen, die alle zum Zentralantrieb führen. Kontaktiert der Steuerstift 7 das Kontaktstück I, dann wird der Sitz vorne nach oben verstellt. Um den Sitz vorne abzusenken, muß das Kontaktstück II mittels des Steuerstiftes 7 kontaktiert werden. Ist der vom Steuerstift 7 und dem Kontaktstück V gebildete Schalter geschlossen, wie dies bei der in Fig. 2 dargestellten Schaltstellung des Steuerstiftes 8 der Fall ist, dann verschiebt der Zentralantrieb den Sitz nach vorne. Eine Verschiebung nach hinten erfordert eine Kontaktierung des Kontaktstückes VI mittels des Steuerstiftes 8. Um den Sitzteil hinten anzuheben, wird der aus dem Kontaktstück III und dem Steuerstift 8 gebildete Schalter geschlossen. Für eine Absenkung des hinteren Endes des Sitzteils wird der Steuerstift 8 in seine untere Schaltstellung gebracht, in der er das Kontaktstück IV kontaktiert. Dank der Schraubenfedern 10 braucht die Handhabe 9 nur freigegeben zu werden, um die Steuerstifte 7 und 8 wieder in die in Fig. 1 dargestellte Ruhestellung zu führen.

Das in Fig. 3 dargestellte zweite Ausführungsbeispiel unterscheidet sich von dem zuvor beschriebenen ersten Ausführungsbeispiel nur dadurch, daß die beiden Steuerstifte 107 und 108 nicht selbst je ein bewegliches Kontaktstück bilden, sondern nur der Betätigung beweglicher Kontaktstücke a1 bis f1 dienen, von denen je eines jedem festen Kontaktstück a2 bis f2 derart zugeordnet ist, daß die Kontaktstücke a1 und a2 denjenigen Schalter A bilden, der geschlossen werden muß, um den Sitzteil vorne anzuheben. Die Absenkung vorne erfolgt durch Schließen des durch die Kontaktstücke b1 und b2 gebildeten Schalters B. Die Kontaktstücke c1 und c2 bilden den Schalter C für das Anheben des hinteren Endes des Sitzteils, die Kontaktstücke d1 und d2 den Schalter D für das Absenken dieses Endes. Für eine Längsverstellung nach vorne muß der durch die Kontaktstücke e1 und e2 gebildete Schalter E, für eine Längsverstellung nach hinten der durch die Kontaktstücke f1 und f2 gebildete Schalter F geschlossen werden. Die Kontaktpaare sind unabhängig voneinander aufgebaut und können nach Bedarf in Form einer Schaltmatrix angeordnet werden. Das zweite Ausführungsbeispiel eignet sich deshalb auch für eine Steuerung mit Speicher, bei der eine Matrixschaltung vorteilhaft ist.

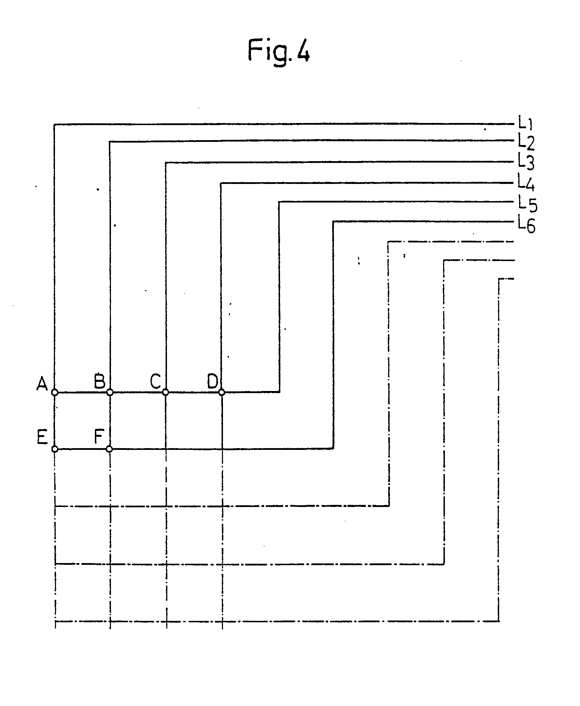

Schließt man beispielsweise eine Leitung L1 an die Kontaktstücke a2 und e2, eine Leitung L2 an die Kontaktstücke b2 und f2, eine Leitung L3 an das Kontaktstück c2, eine Leitung L4 an das Kontaktstück d2, eine Leitung L5 an die Kontaktstücke a1, b1, c1 und d1 sowie eine Leitung L6 an die Kontaktstücke e1 und f1 an, wie dies Fig. 3 zeigt, dann läßt sich die in Fig. 4 dargestellte Matrix verwirklichen, von deren acht Kreuzungspunkten sechs durch die Schalter A bis F gebildet werden.

Selbstverständlich könnte diese Matrix noch erweitert werden, wie in Fig. 4 durch die strichpunktierten Linien angedeutet ist, beispielsweise mit neun Leitungen auf zwanzig Kreuzungspunkte. Die festen Kontaktstücke a2 bis f2 sowie die beweglichen Kontaktstücke a1 bis f1 sind wie die Kontaktstücke des ersten Ausführungsbeispiels an der Abdeckplatte 104 angeordnet, welche die Gehäuserückseite bildet. Wegen der übrigen Einzelheiten der Ausbildung des zweiten Ausführungsbeispiels wird auf die Ausführungen zum ersten Ausführungsbeispiel verwiesen.

**Patentansprüche**

1. Steuerschalter für eine mindestens zwei unterschiedliche Verstellbewegungen eines Fahrzeugsitzes ermöglichende, motorisch angetriebene Verstelleinrichtung, mit wenigstens zwei je ein Betätigungsglied für den unterschiedlichen Verstellbewegungen zugeordneten Kontaktsystemen (I bis VI; a1 bis f1, a2 bis f2) bildenden Zapfen (7, 8; 107, 108), welche quer zu ihrer Längserstreckung relativ zu einer Führungsplatte (2) bewegbar sind, welche mit die Bewegungsbahn der Zapfen (7, 8; 107, 108) bestimmenden und von letzteren durchdrungenen Durchbrüchen (5, 6) versehen ist, und mit einer am einen Ende aller Zapfen (7, 8; 107, 108) angreifenden Handhabe (9), dadurch gekennzeichnet, daß

a) die Durchbrüche (5, 6) als Teile einer eine Bewegung jeweils nur eines der Zapfen (7, 8; 107, 108) in eine einer Schaltstellung entsprechende Position gestattenden Kulisse ausgebildet sind,

b) die Kulisse aus zwei kreuzförmigen Schlitzen (5, 6) besteht, deren Mittelpunkte einen Abstand voneinander haben, der größer ist als der Abstand der Längsachse der beiden Zapfen (7, 8; 107, 108) voneinander, von denen je einer jeden kreuzförmigen Schlitz (5, 6) durchdringt.

2. Steuerschalter nach Anspruch 1, dadurch gekennzeichnet, daß die Handhabe (9) quer zur Längserstreckung der Zapfen (7, 8; 107, 108) unbeweglich mit den Zapfen verbunden ist.

3. Steuerschalter nach Anspruch 1 oder 2 dadurch gekennzeichnet, daß der eine der beiden sich kreuzenden Teile jedes kreuzförmigen Schlitzes (5, 6), in dessen einem Endbereich sich die Schaltstellung des zugeordneten Zapfens (7, 8; 107, 108) für eine Sitzlängsverstellung befindet, mit dem entsprechenden Teil des anderen kreuzförmigen Schlitzes fluchtet.

4. Steuerschalter nach einem der Ansprüche 1 bis 4, dadurch gekennzeichnet, daß zumindest einer der Zapfen (7, 8) wenigstens auf einem Teil seiner Länge als Kontaktstück ausgebildet ist, das in jeder Schaltstellung wenigstens ein zweites Kontaktstück (I bis VI) des der betreffenden Schaltstellung zugeordneten Kontaktsystems kontaktiert.

5. Steuerschalter nach einem der Ansprüche 1 bis 3, dadurch gekennzeichnet, daß zumindest einer der Zapfen (107, 108) in jeder Schaltstellung wenigstens das dieser Schaltstellung zugeordnete Kontaktsystem im einen von seinen beiden Schaltzuständen hält.

6. Steuerschalter nach einem der Ansprüche 1 bis 5, gekennzeichnet durch ein von den Zapfen (7, 8; 107, 108) und/oder der Handhabe (9) beeinflußtes, elastisches Rückstellsystem (10), das bei jeder Bewegung wenigstens eines der Zapfen (7, 8; 107, 108) aus einer neutralen Stellung heraus in eine Schaltstellung einer eine selbsttätige Rückführung der Zapfen in ihre neutrale Stellung gestattenden Belastung ausgesetzt ist.

**Revendications**

1. Commutateur de commande pour un dispositif de réglage, qui permet au moins deux déplacements différents de réglage d'un siège de véhicule et est entraîné par un moteur, comportant au moins deux tétons (7, 8; 107, 108), qui forment chacun un organe d'actionnement pour des systèmes de contact (I à VI; a1 à f1, a2 à f2) associés aux différents déplacements de réglage, et sont déplaçables, transversalement par rapport à leur direction longitudinale, par rapport à une plaque de guidage (2), qui comporte des perçages (5, 6) déterminant la trajectoire de déplacement des tétons (7, 8; 107, 108) et traversés par ces derniers, et une poignée (9), qui s'accroche à une extrémité de tous les tétons (7, 8; 107, 108), caractérisé en ce que
a) les perçages (5, 6) sont réalisés sous la forme de parties d'une coulisse permettant la venue respectivement d'un seul des tétons (7, 8; 107, 108) dans une position correspondant à une position de commutation,
b) la coulisse est formée de deux fentes cruciformes (5, 6), dont les centres sont séparés par une distance supérieure à la distance réciproque des axes longitudinaux des tétons (7, 8; 107, 108), dont chacun traverse respectivement une fente cruciforme (5, 6).

2. Commutateur de commande selon la revendication 1, caractérisé en ce que la poignée (9) est reliée aux tétons en étant immobile transversalement par rapport à l'étendue longitudinale des tétons (7, 8; 107, 108).

3. Commutateur de commande selon la revendication 1 ou 2, caractérisé en ce que l'une des deux parties, qui se croisent, de chaque fente cruciforme (5, 6), dans une extrémité de laquelle se trouve la position de commutation du téton associé (7, 8; 107, 108) pour un réglage longitudinal du siège, est alignée avec la partie correspondante de l'autre fente cruciforme.

4. Commutateur de commande selon l'une des revendications 1 à 3, caractérisé en ce qu'au moins l'un des tétons (7, 8) est agencé, sur au moins une partie de sa longueur, sous la forme d'une pièce de contact, qui, dans chaque position de commutation, est en contact avec au moins une seconde pièce de contact (I à VI) du système de contact, associé à la position de commutation considérée.

5. Commutateur de commande selon l'une des revendications 1 à 3, caractérisé en ce que, dans chaque position de commutation, au moins l'un des tétons (107, 108) maintient au moins le système de contact associé à cette position de commutation, dans l'un de ses deux états de commutation.

6. Commutateur de commande selon l'une des revendications 1 à 5, caractérisé par un système élastique de rappel (10), qui est influencé par les tétons (7, 8; 107, 108) et/ou par la poignée (9) et est soumis à une charge permettant un rappel automatique des tétons dans leur position neutre, lors de chaque déplacement d'au moins l'un des tétons (7, 8; 107, 108) depuis une position neutre dans une position de commutation.

**Claims**

1. A control switch for a motor-driven adjusting means permitting of at least two different adjustment movements of a motor vehicle seat and comprising at least two studs (7, 8; 107, 108) forming in each case an actuating member for contact systems (I to VI; a1 to f1, a2 to f2) associated with various adjustment movements, the studs (7, 8; 107, 108) being adapted for movement transversely to their longitudinal extension and in relation to a guide plate (2) which is provided with apertures (5, 6) for determining the path of movement of studs (7, 8; 107, 108) and which are penetrated by these latter, and having a control handle (9) engaging one end of all the studs (7, 8; 107, 108), characterised in that
a) the apertures (5, 6) are constructed as parts of a sliding block which permits of a movement of in each case only one of the studs (7, 8; 107, 108) in one sliding block which permits a position corresponding to a switching position,

b) the sliding block consists of two cruciform slots (5, 6), of which the central points are spaced apart by an amount which is greater than the distance between the longitudinal axis of the two studs (7, 8; 107, 108) from each other, each of which penetrates a cruciform slot (5, 6).

2. A control switch according to Claim 1, characterised in that the control handle (9) is connected to the studs in such a way as to be immovable transversely to the longitudinal extension of the studs (7, 8; 107, 108).

3. A control switch according to Claim 1 or 2, characterised in that one of the two intersection parts of each cruciform slot (5, 6) in one end zone of which there is a switching position of the associated stud (7, 8; 107, 108) for a longitudinal seat adjustment, is aligned with the corresponding part of the other cruciform slot.

4. A control switch according to one of Claims 1 to 3, characterised in that at least one of the studs (7, 8) is constructed as a contact piece over at least a part of its length and in each switching position contacts at least one second contact piece (I to VI) of the contact system associated with the relevant switch position.

5. A control switch according to one of Claims 1 to 3, characterised in that in each switch position at least one of the studs (107, 108) maintains at least the contact system associated with this switch position in one of its two switching states.

6. A control switch according to one of Claims 1 to 5, characterised by, influenced by one of the studs (7, 8; 107, 108) and/or the control handle (9), a flexible restoring system (10) which at every movement of at least one of the studs (7, 8; 107, 108) out of a neutral position and into a switching position is subjected to a loading which permits of automatic return of the studs to their neutral position.

# Fig.1

# Fig.2

# Fig.3

Fa Keiper Recaro... ...

# Fig.4